Europäisches Patentamt

European Patent Office

Office européen des brevets

(19)

(11) **EP 0 670 449 B1**

(12) **FASCICULE DE BREVET EUROPEEN**

(45) Date de publication et mention
de la délivrance du brevet:
**22.12.1999 Bulletin 1999/51**

(51) Int Cl.⁶: **F16L 37/084**

(21) Numéro de dépôt: **95400447.9**

(22) Date de dépôt: **02.03.1995**

(54) **Dispositif de raccordement rapide et étanche pour conduites tubulaires**

Vorrichtung zum schnellen und dichten Verbinden von Rohren

Device for quick and leak-proof connection of pipes

(84) Etats contractants désignés:
**BE DE ES GB IT LU NL SE**

(30) Priorité: **04.03.1994 FR 9402505**

(43) Date de publication de la demande:
**06.09.1995 Bulletin 1995/36**

(73) Titulaire: **HUTCHINSON S.A.**
**75008 Paris (FR)**

(72) Inventeurs:
• **Godeau, Denis**
  **F-45260 Vieilles Maisons/Joudry (FR)**

• **Exandier, Philippe**
  **F-45120 Chalette (FR)**

(74) Mandataire: **Hurwic, Aleksander et al**
**Cabinet Orès**
**6, Avenue de Messine**
**75008 Paris (FR)**

(56) Documents cités:
**DE-A- 4 035 581        DE-A- 4 101 757**
**US-A- 4 925 217        US-A- 4 948 176**
**US-A- 5 226 679        US-A- 5 275 443**

## Description

La présente invention se rapporte principalement à un dispositif de raccordement rapide et étanche pour conduites tubulaires.

Dans de nombreux domaines, notamment dans l'industrie automobile, il est primordial de pouvoir raccorder de manière rapide, parfaitement étanche, sûre et fiable des conduites tubulaires. Ces conduites peuvent, par exemple, appartenir à un circuit pneumatique, à un circuit hydraulique conduisant de l'eau sous basse ou moyenne pression, aux températures ambiantes ou élevées, comme par exemple le circuit de refroidissement du moteur ou encore à un circuit d'huile, comme par exemple un circuit d'assistance de direction.

Pour s'assurer que la connexion a été établie correctement, l'on a proposé de munir le dispositif de raccordement d'un témoin de verrouillage ayant une première position, avant le raccordement, et une seconde position, dans la condition raccordée et verrouillée. Toutefois, la distinction entre ces deux positions n'est pas toujours évidente pour l'ouvrier chargé d'effectuer le raccordement ni pour le robot dans le cas d'une chaîne de montage robotisée.

US-A-4 925 217 décrit un dispositif d'interconnexion comportant un témoin de vérouillage muni de deux longerons visibles avant le raccordement et masqués après le raccordement.

US-A-4 925 217 ne décrit pas de bagues apparentes avant le raccordement et masquées après le raccordement.

C'est par conséquent un but de la présente invention d'offrir un dispositif de raccordement de conduites tubulaires étanche, sûr et fiable.

C'est également un but de la présente invention d'offrir un tel dispositif susceptible d'être muni d'un témoin non ambigu de connexion et de verrouillage.

Ces buts sont atteints selon l'invention par un dispositif de raccordement comprenant deux éléments tubulaires à raccorder, un dispositif de verrouillage dans la condition raccordée et un témoin de connexion et/ou de verrouillage mobile entre une première position visible et une seconde position masquée. Lors du raccordement, un des éléments tubulaires à raccorder et/ou un dispositif de verrouillage assure(nt) l'entraînement du témoin de la première position visible vers la seconde position masquée.

Avantageusement, le dispositif de verrouillage comporte une bague comprenant au moins un ergot pénétrant dans une lumière ménagée dans un premier des éléments tubulaires à raccorder et prenant appui sur un élément de retenu, notamment un épaulement du second élément tubulaire à raccorder.

Avantageusement, la bague de verrouillage comporte une zone de réception du témoin dans la seconde position et en assure le masquage.

L'invention a principalement pour objet un dispositif de raccordement étanche d'un premier élément tubulaire avec un second élément tubulaire pour circuit de fluide comportant des moyens de verrouillage dans une condition raccordée du premier et du second éléments tubulaires et un témoin de raccordement et/ou de verrouillage dont une partie apparente avant raccordement des premier et second éléments tubulaires est masquée dans la condition raccordée de ces éléments, ledit témoin comportant une bague, caractérisé en ce que la bague est apparente avant le raccordement, et en ce que le dispositif comporte une pièce masquant la bague du témoin uniquement après raccordement des premier et second éléments tubulaires.

L'invention a également pour objet un dispositif de raccordement, caractérisé en ce que le premier élément tubulaire est un embout mâle comprenant une excroissance comportant une rampe sur un versant dirigé vers l'extrémité de raccordement et un élément de retenu et, notamment, un épaulement sur le versant opposé, en ce que le second élément tubulaire a à son extrémité de raccordement un diamètre interne légèrement supérieur au diamètre externe de l'embout mâle et comporte au moins une lumière, en ce qu'il comporte en outre une bague de verrouillage entourant le second élément tubulaire comprenant au moins un ergot élastique traversant, au moins dans la condition raccordée, la lumière du second élément tubulaire, en ce que, lors du raccordement, le ou les ergot(s) est(sont) repoussé(s) par la rampe, puis est(sont) verrouillé(s) par l'élément de retenu, et en ce que le témoin de raccordement et/ou de verrouillage comporte(nt) une bague visible dans la condition non raccordée et un élément repoussé, lors du raccordement, par l'embout mâle, de manière à ce que la bague du témoin de verrouillage ou de raccordement se loge dans la bague de verrouillage qui masque sa présence.

L'invention a également pour objet un dispositif, caractérisé en ce que les ergots ont en coupe axiale un profil en Z dont l'extrémité de la barre horizontale interne est dirigée à l'opposé de l'extrémité de raccordement du second élément tubulaire.

L'invention a également pour objet un dispositif, caractérisé en ce que le ou les ergot(s) et la ou les lumière(s) pratiqués dans le second élément tubulaire ont une forme allongée et sont disposés radialement autour d'un axe du dispositif de raccordement et, en ce que l'extrémité de chaque ergot et/ou le bord de chaque lumière comporte(nt) une rampe permettant de faire tourner la bague de verrouillage assurant le désengagement des ergots de l'élément de retenue de l'embout mâle pour assurer la déconnexion du dispositif de raccordement.

L'invention a également pour objet un dispositif de raccordement, caractérisé en ce que la bague de verrouillage et le second élément tubulaire ont une configuration relative à partir de laquelle les ergots reviennent par élasticité dans la ou les lumière(s) du second élément tubulaire pour assurer le réarmement automatique du verrouillage.

L'invention a également pour objet un dispositif, caractérisé en ce que la bague de verrouillage et le second élément tubulaire ont une deuxième configuration relative stable dans laquelle les ergots reposent sur la surface externe du second élément tubulaire, la configuration relative à partir de laquelle les ergots reviennent par élasticité dans la ou les lumière(s) du second élément tubulaire étant une configuration intermédiaire angulairement entre la condition dans laquelle le ou les ergot(s) pénètre(nt) dans la ou les lumière(s) du second élément tubulaire et la deuxième configuration relative stable.

L'invention a également pour objet un dispositif de raccordement, caractérisé en ce que le témoin de raccordement ou de verrouillage est amovible.

L'invention a également pour objet un dispositif de raccordement, caractérisé en ce que le témoin de raccordement ou de verrouillage comporte des moyens de rappel dans la position apparente après une déconnexion.

L'invention a également pour objet un dispositif, caractérisé en ce que le second élément tubulaire comporte des moyens de blocage en translation axiale de la bague de verrouillage empêchant la translation axiale de la bague de verrouillage par rapport au second élément tubulaire.

L'invention a également pour objet un dispositif, caractérisé en ce que le second élément tubulaire comporte des moyens de guidage en translation de la bague de verrouillage entre une condition relative dans laquelle les ergots reposent sur la surface externe du second élément tubulaire et une condition de verrouillage dans laquelle les ergots sont engagés dans la ou les lumière(s) ménagée(s) dans le second élément tubulaire.

L'invention sera mieux comprise au moyen de la description ci-après et des figures annexées données comme des exemples non limitatifs et sur lesquelles :

- la figure 1 est une vue en perspective éclatée d'un exemple de réalisation du dispositif de raccordement selon la présente invention ;
- la figure 2 est une vue en perspective avec arrachement partiel du dispositif de raccordement selon la présente invention dans une condition non raccordée ;
- la figure 3 est une vue analogue à la figure 2, dans une condition raccordée ;
- la figure 4 est une vue longitudinale d'un deuxième exemple de réalisation du dispositif de raccordement selon la présente invention dans une condition non raccordée ;
- la figure 5 est une vue analogue à la figure 4 dans une condition raccordée ;
- la figure 6 est une vue en coupe du dispositif de la figure 5 ;
- la figure 7 comporte trois vues en coupe des ergots susceptibles d'être mis en oeuvre dans un dispositif de raccordement selon la présente invention ;
- la figure 8 est une coupe radiale du dispositif selon la présente invention lors du démontage ;
- la figure 9 est une vue axiale d'une troisième variante de réalisation du dispositif selon la présente invention dans une condition non raccordée ;
- la figure 10 est une vue en coupe axiale du dispositif de la figure 9 dans une condition raccordée ;
- la figure 11 est une coupe axiale d'un troisième exemple de réalisation d'un dispositif selon la présente invention dans une condition non raccordée ;
- la figure 12 est une vue en coupe radiale du dispositif de la figure 11 ;
- la figure 13 est une coupe longitudinale du dispositif de la figure 11 dans une condition raccordée ;
- la figure 14 est une vue en coupe radiale du dispositif de la figure 13 dans la condition raccordée ;
- la figure 15 est une coupe radiale du dispositif de la figure 13 lors du démontage dans une position permettant le réarmement ;
- la figure 16 est une coupe radiale du dispositif après démontage ;
- la figure 17 est une vue longitudinale de l'exemple préféré de réalisation d'un connecteur femelle selon la présente invention ;
- la figure 18 est une vue en coupe longitudinale du connecteur femelle de la figure 17 ;
- la figure 19 est une première coupe radiale du connecteur femelle de la figure 17 ;
- la figure 20 est une seconde coupe radiale du connecteur femelle de la figure 17 ;
- la figure 21 est une vue longitudinale d'une deuxième variante de l'exemple préféré de réalisation d'un connecteur femelle selon la présente invention ;
- la figure 22 est une coupe longitudinale du connecteur femelle de la figure 21 ;
- la figure 23 est une première coupe radiale à plus grande échelle du connecteur femelle de la figure 21 ;
- la figure 24 est une deuxième coupe radiale du connecteur femelle de la figure 21 ;
- la figure 25 est une vue longitudinale de l'exemple préféré de réalisation d'une bague de verrouillage selon la présente invention ;
- la figure 26 est une première coupe longitudinale de la bague de verrouillage de la figure 25 ;
- la figure 27 est une vue de face de la bague de verrouillage de la figure 25 ;
- la figure 28 est une seconde vue en coupe longitudinale de la bague de verrouillage de la figure 25 ;
- la figure 29 est une coupe radiale, à plus grande échelle de la bague de verrouillage de la figure 25 ;
- la figure 30 est une vue longitudinale de l'exemple préféré de réalisation du témoin selon la présente invention ;
- la figure 31 est une coupe radiale du témoin de la figure 30 ;
- la figure 32 est une coupe longitudinale du témoin de la figure 30 ;

- la figure 33 est une coupe longitudinale d'un dispositif selon la présente invention en cours d'assemblage ;

- la figure 34 est une vue en coupe d'un dispositif selon la présente invention assemblée.

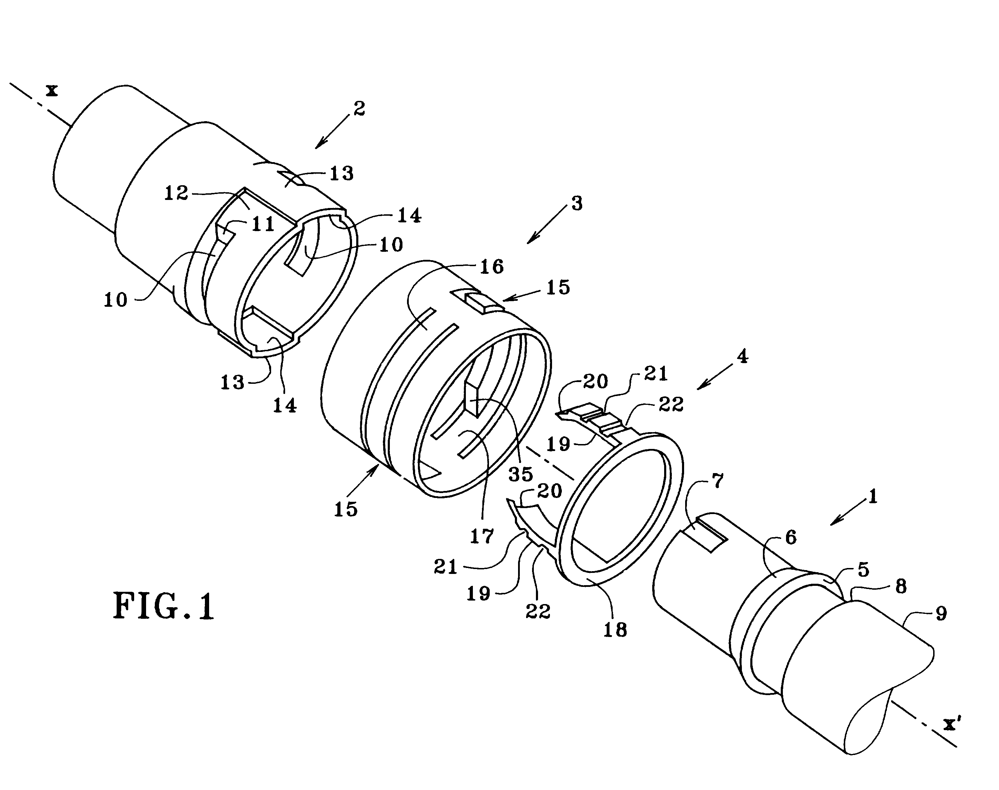

Sur les figures 1 à 34, l'on a utilisé les mêmes références pour désigner les mêmes éléments.

Sur la figure 1, l'on peut voir un dispositif de raccordement d'axe x-x' selon la présente invention comportant un premier élément tubulaire 1 et un second élément tubulaire 2 à raccorder, un manchon ou une bague de verrouillage 3 et un témoin de raccordement et/ou de verrouillage 4.

Dans un exemple avantageux de la figure 1, le premier élément tubulaire 1 est un embout tubulaire mâle comportant un élément de retenue 5, par exemple un épaulement annulaire dont le versant opposé comporte une rampe tronconique faisant avec l'axe de l'embout un angle par exemple compris entre 20 et 30°. Avantageusement, l'embout 1 comporte un repère angulaire 7, par exemple un évidement pratiqué dans la paroi externe de l'embout à son extrémité de raccordement. Derrière la rampe 6, c'est-à-dire à l'opposé de l'extrémité de raccordement, l'embout 1 comporte avantageusement une surface d'appui 8 tronconique assurant la transition vers une zone 9 de diamètre supérieur à celui de l'extrémité de raccordement de l'embout 1.

Le second élément tubulaire 2 a, au niveau de l'extrémité de raccordement, un diamètre interne légèrement supérieur au diamètre externe de l'élément tubulaire 1, de manière à former un connecteur femelle, l'élément tubulaire 1 formant un embout mâle. Le second élément tubulaire 2 comporte au moins une, de préférence deux lumières 10, avantageusement disposées symétriquement par rapport à un plan passant par l'axe x-x' du dispositif de raccordement.

Avantageusement, la ou les lumière(s) 10 a (ont) une forme allongée s'étendant sensiblement parallèlement à un diamètre du second élément tubulaire. Comme il sera expliqué ci-après, une extrémité de chaque lumière 10 d'un exemple de réalisation du dispositif de raccordement permettant la déconnexion des éléments tubulaires 1 et 2 comporte une rampe 11. Au contraire, les extrémités des lumières 10 d'un autre exemple de réalisation du dispositif de raccordement empêchant la déconnexion des éléments tubulaires se terminent par un bord abrupt, par exemple par une surface plane dirigée vers l'axe x-x'.

La surface externe du second élément tubulaire 2 de cet exemple de réalisation comprend avantageusement dans le prolongement angulaire de chaque lumière 10, une première zone 12 d'un premier diamètre suivie par une seconde zone 13 d'un diamètre plus grand que le diamètre de la première zone 12 ou un méplat. Avantageusement, la face interne se trouvant en vis-à-vis de la seconde zone 13 comporte une cavité allongée 14 de repérage angulaire et/ou de guidage parallèle à l'axe x-x'.

Le manchon ou la bague de verrouillage 3 a un diamètre interne légèrement supérieur au diamètre externe de l'élément tubulaire 2. A chaque lumière 10 du second élément tubulaire 2, correspond un ergot 15 comportant une languette élastique 16 portant un élément saillant 17 de forme complémentaire à celle de la lumière 10 correspondante, mais d'épaisseur supérieure à la profondeur de cette lumière 10.

Avantageusement, les éléments saillants 17 comportent à au moins une de leurs extrémités une rampe 35 facilitant le déverrouillage du dispositif selon la présente invention par rotation avec glissement sur les rampes 11, les lumières 10 du second élément tubulaire 2.

Le témoin 4 de raccordement et/ou de verrouillage comporte une bague 18 dont le diamètre interne est supérieur au diamètre externe de l'extrémité de raccordement de l'embout 1 et dont le diamètre externe est légèrement inférieur au diamètre interne de la bague de verrouillage 3, ainsi qu'un manchon ou, comme illustré, des languettes 19 s'étendant sensiblement perpendiculairement au plan de la bague 18. Chaque languette 19 comporte avantageusement une extrémité 20 recourbée vers l'axe x-x' ainsi que deux encoches 21 et 22 de réception des éléments saillants 17 des ergots 15. Le témoin 4 est avantageusement d'une couleur contrastée par rapport à celle de la bague de verrouillage 3 et du premier élément tubulaire 1.

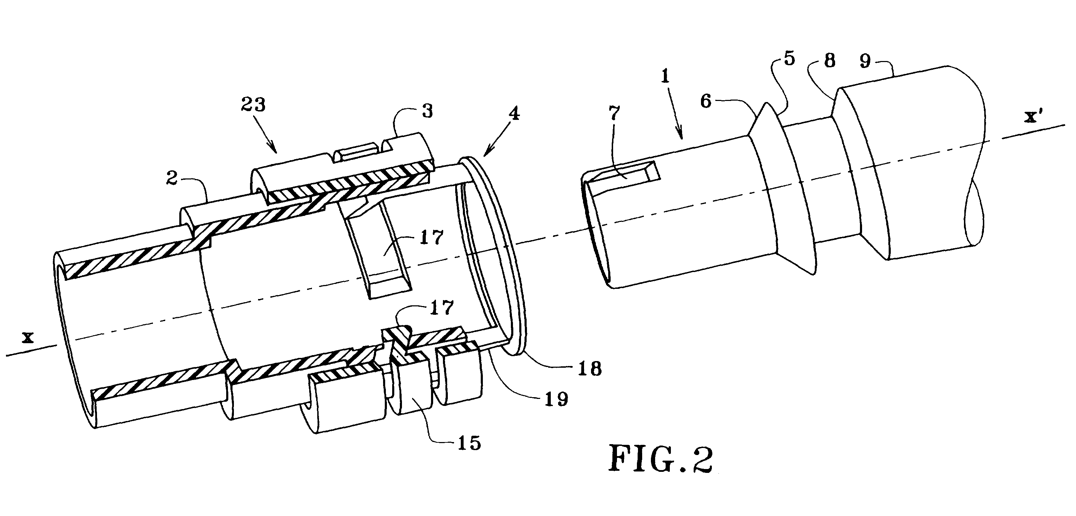

Sur la figure 2, l'on peut voir l'embout tubulaire mâle 1 et un connecteur femelle 23 comportant un élément tubulaire 2, la bague de verrouillage 3 et le témoin de raccordement et/ou de verrouillage 4 assemblés. La bague de verrouillage 3 est montée autour du second élément tubulaire 2, le ou les éléments saillants 17 pénétrant dans la ou les lumière(s) 10. Les languettes 19 du témoin 4 pénètrent à l'intérieur du second élément tubulaire 2, les premières encoches 21 recevant les éléments saillants 17 des ergots 15 de la bague de verrouillage 3 (non visibles sur la figure 2). La bague 18 ainsi qu'une partie des languettes 19 dépassent du second élément tubulaire 2 et de la bague de verrouillage 3.

L'on peut remarquer que la bague 3 et le témoin 4 du connecteur femelle 23 sont immobilisés en translation selon l'axe x-x' et, par suite, imperdables. De plus, les languettes 19 du témoin 4 peuvent comporter un ergot élastique s'engageant lors du montage du connecteur 23 dans une lumière allongée axialement (non représentés).

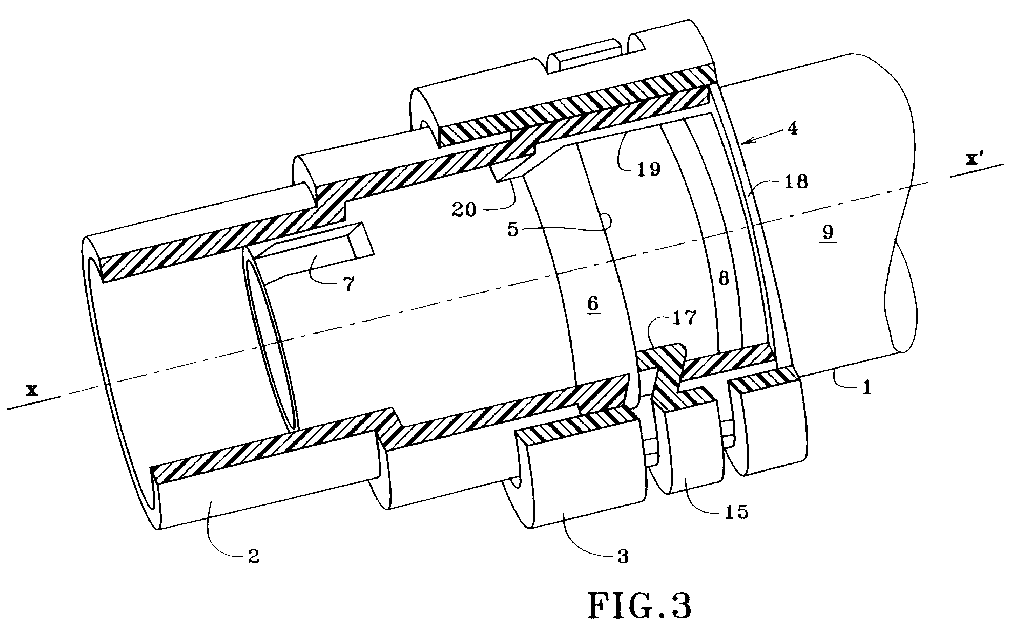

L'on passe de la condition déconnectée de la figure 2 à la condition assemblée de la figure 3 par l'alignement des axes du premier élément tubulaire 1 avec l'axe du second élément tubulaire 2 et par translation selon l'axe commun x-x' avec pénétration de l'embout mâle 1 dans le connecteur femelle 23. La rampe 6 repousse les éléments saillants 17 des ergots 15 qui libèrent les languettes 19 du témoin 4 qui est entraîné en translation par l'embout mâle 1 jusqu'au blocage obtenu par verrouillage des éléments saillants 17 des ergots 15 dans les secondes encoches 22 et simultanément leur encliquetage au niveau de l'épaulement 5 de l'embout mâle 1. La translation du témoin 4 provoque sa disparition à l'intérieur de la bague de verrouillage 3.

Il peut s'avérer nécessaire d'autoriser une déconnexion des éléments tubulaires 1 et 2 du dispositif de raccordement selon l'invention, par exemple en vue d'une opération d'inspection, de test de modification du circuit ou de remplacement d'une pièce. Le déverrouillage du dispositif de raccordement peut être obtenu, par exemple, par une extraction des ergots 15 des lumières 10. La déconnexion s'effectue en écartant les éléments saillants 17 des ergots 15 bloquant l'épaulement 5 de l'embout mâle 1. A ce moment là, des tractions en sens opposé sur le connecteur femelle 23 et l'embout mâle 1 assurent la déconnexion. Avantageusement, le déverrouillage, notamment l'extraction des ergots 15 s'effectue sans mise en oeuvre d'outils.

Dans une variante avantageuse, non représentée, le témoin 4 est muni d'un élément élastique, notamment d'un bossage, provoquant, lors du déverrouillage, le retour du témoin vers sa position visible.

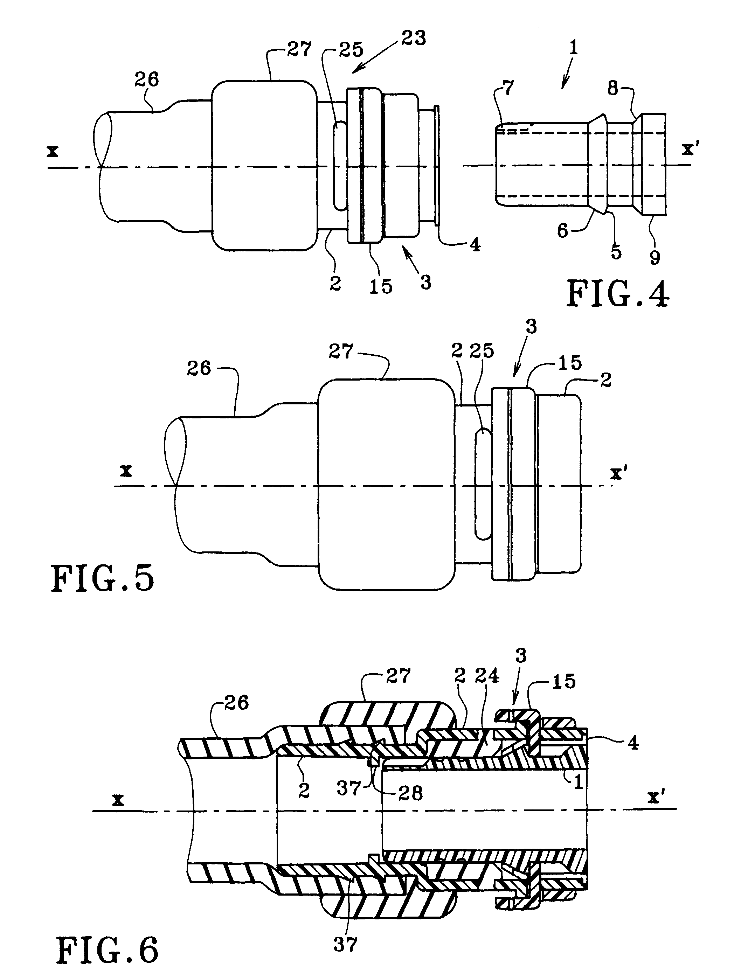

Il peut s'avérer avantageux d'améliorer l'étanchéité du dispositif de raccordement selon la présente invention en disposant un joint, par exemple, en élastomère ou en matière plastique entre les premier et second éléments tubulaires. Avantageusement, le joint 24 est directement moulé par injection à l'intérieur du connecteur femelle 23. Un exemple d'un dispositif de raccordement selon la présente invention comportant un tel joint moulé par injection est illustré sur les figures 4 à 6. Le second élément tubulaire 2 comporte un orifice d'injection 25 permettant le moulage 24.

Dans l'exemple de réalisation des figures 4 à 6, le second élément tubulaire 2 est un insert, par exemple en matière plastique pénétrant à force dans une conduite tubulaire 26, par exemple une durite en caoutchouc. Avantageusement, le second élément tubulaire est muni sur sa face externe des nervures radiales 37 de rétention dites en "sapin". Avantageusement, un manchon 27 renforce la solidarisation entre la conduite tubulaire flexible en caoutchouc 26 et le second élément tubulaire 2. Avantageusement, le second élément tubulaire 2 comporte un épaulement interne 28 formant butée de fin de course de pénétration de l'embout mâle 1.

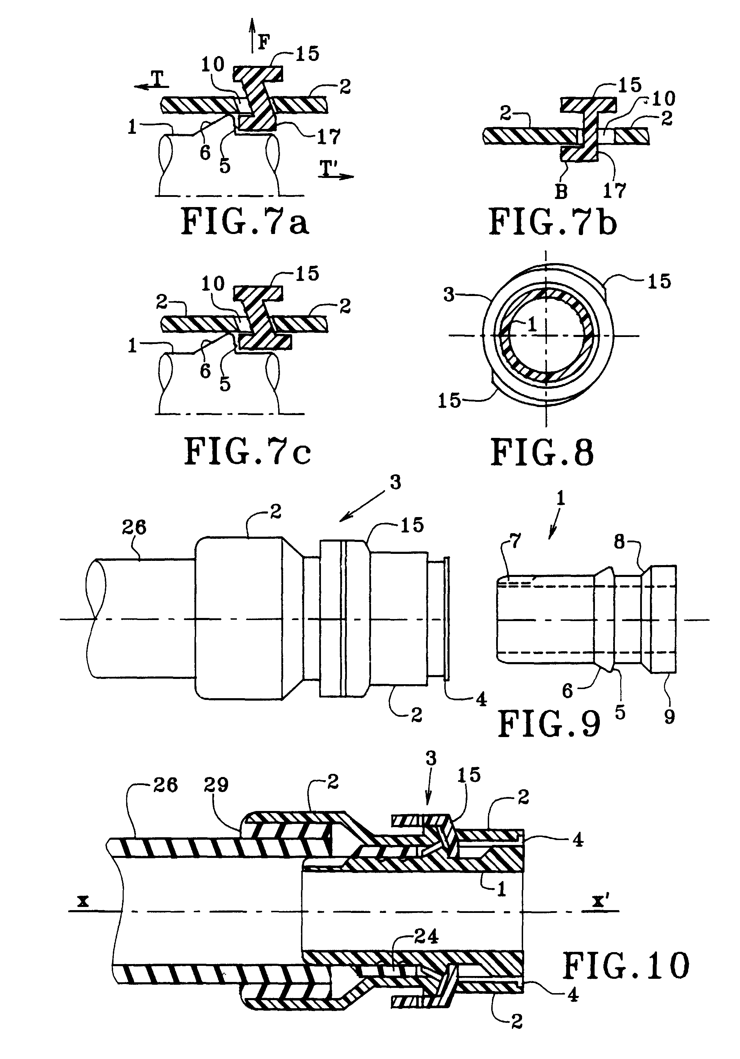

Des tractions $\vec{T}$ et $\vec{T'}$ de séparation (figure 7a) exercées en sens opposées sur les éléments tubulaires 1 et 2 provoquent un appui de l'élément de retenue 5 de l'élément tubulaire 1 sur la partie saillante 17 de l'ergot 15. Si l'élément de retenue 5 n'est pas parfaitement radial, c'est-à-dire perpendiculaire à l'axe x-x', il en résulte une force ayant une composante radiale $\vec{F}$ de remontée des ergots 15 qui, si elle dépasse la force de rappel élastique des languettes 16, peut provoquer une déconnexion accidentelle du dispositif selon l'invention.

Sur la figure 7, l'on peut voir trois exemples de réalisation avantageux de profil des éléments saillants 17 des ergots 15 permettant de résister sans déconnexion accidentelle à des tractions importantes sur le dispositif de raccordement selon la présente invention. Pour augmenter la valeur des forces de traction provoquant la déconnexion accidentelle, l'on peut, comme illustré sur la figure 7a, incliner le côté des éléments saillants 17 des ergots 15 ainsi que la surface de contact radiale des lumières 10 orientés du côté de l'extrémité de connexion de l'élément tubulaire 2. Une inclinaison comprise entre 10 et 30° permet de résister sans déconnexion à une traction de 30 daN. L'on utilise par exemple un profil en forme de Z. La barre horizontale externe du Z forme un élément élastique, notamment la languette 16. La barre horizontale interne du Z forme l'élément d'accrochage sur l'élément de retenue 5 de l'embout mâle 1. La barre oblique du Z reliant les deux éléments horizontaux oppose une réaction à un effort de déplacement radial des ergots consécutifs à une traction de séparation sur le dispositif de raccordement selon la présente invention.

Sur la figure 7b, l'on peut voir un ergot 15 dont l'élément saillant 17 comporte une butée axiale B dirigée vers l'élément de retenue 5. La largeur totale de l'élément saillant 17 y compris de la butée B, est sensiblement égale à la largeur des lumières 10. Lors du raccordement, la bague de verrouillage 3 se déplace légèrement de manière à ce que, comme illustré sur la figure 7b, la butée B soit couverte par la paroi interne du second élément tubulaire 2.

Il est bien entendu que l'inclinaison des côtés de l'élément saillant 17 de l'ergot 15 et la butée B peuvent être combinées, comme illustré sur la figure 7c.

Sur les figures 9 et 10, l'on peut voir une variante de réalisation du dispositif de raccordement selon la présente invention comportant un élément tubulaire 2 raccordé extérieurement sur une conduite tubulaire flexible 26, par exemple en élastomère, par l'intermédiaire d'un bourrelet ou d'une couronne 29, par exemple également en élastomère.

Le témoin 4 des exemples de réalisation des figures 4, 5, 6, 9 et 10 est masqué, dans la condition verrouillée, par le second élément tubulaire 2 et non pas par la bague de verrouillage 3.

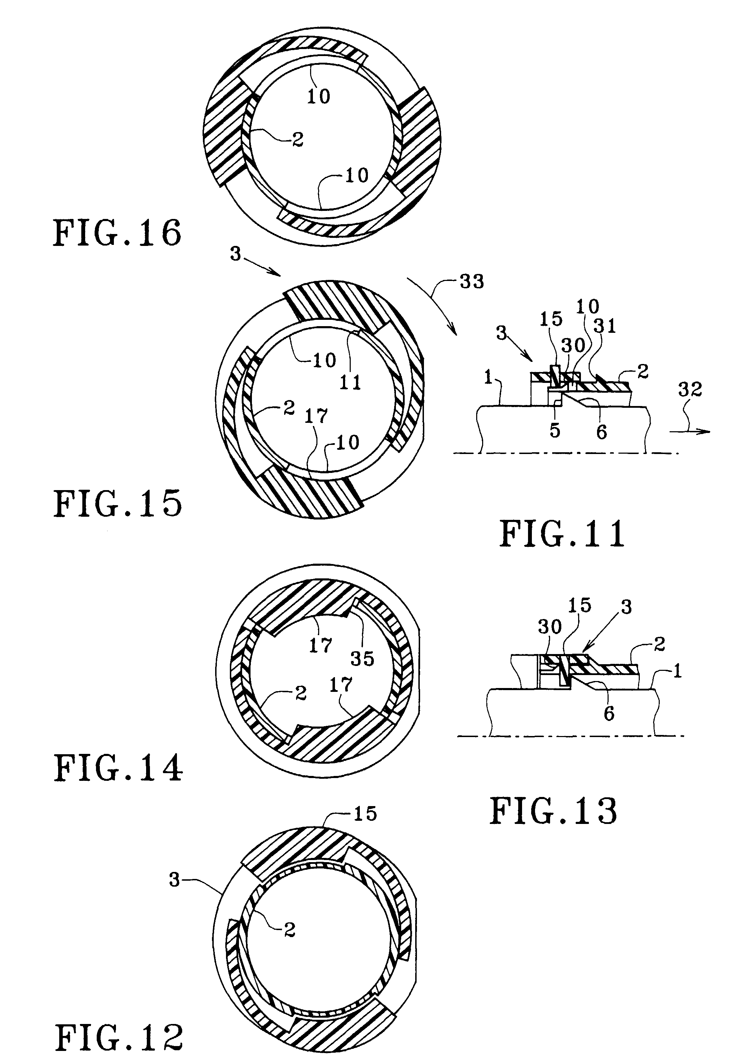

Sur les figures 11 à 13, l'on peut voir un exemple de réalisation d'un dispositif de raccordement selon la présente invention comportant une bague de verrouillage 3 coulissante sur le second élément tubulaire 2.

Le second élément tubulaire 2 comporte avantageusement une rampe 30 menant à la lumière 10 et une butée 31 de blocage de la translation de la bague de verrouillage 3. Avant leur raccordement, les ergots 15 se trouvent en position saillante illustrés sur les figures 11 et 12. Le verrouillage est obtenu par translation de l'embout tubulaire 1 et de la bague 3 selon la flèche 32. Les ergots 15 pénètrent dans la lumière 10 et assurent le blocage des éléments de retenue 5 de l'embout mâle 1. Le déverrouillage est obtenu, comme dans le cas des variantes de réalisation des figures précédentes, par rotation de la bague de verrouillage 3 par rapport aux seconds éléments tubulaires 2 selon la flèche 33. Cette rotation est facilitée par la présence d'une rampe 11 sur une des extrémités de la lumière 10 et d'une rampe 35 sur l'élément saillant 17 de l'ergot 15. Les figures 15 et 16 illustrent le déverrouillage du dispositif de raccordement selon la présente invention. Sur la figure 15, l'on peut voir la bague 3 dans une condition déverrouillée, l'élément saillant 17 de l'ergot 15 reposant dans la zone 12. Si on lâche la bague 3 dans cette position, l'élément saillant 17 revient dans la lumière 10 par élasticité de l'ergot 15. L'on obtient un réarmement automatique du verrouillage du raccordement. En continuant à tourner la bague 3 selon la flèche 33, l'ergot 15 pénètre dans la seconde zone 13 dans laquelle il repose de manière stable. A partir de cette position, l'on n'obtient pas de réarmement automatique du verrouillage. Le déverrouillage de la variante de réalisation du dispositif selon l'invention comportant une butée B au niveau des ergots 15 peut nécessiter un léger déplacement axial de la bague de verrouillage 3 par rapport au second élément tubulaire 2.

Le déverrouillage par rotation des figures 14 à 16 s'applique également, avantageusement, aux autres variantes du dispositif selon la présente invention dans la mesure où l'on désire les munir de la possibilité de déconnexion.

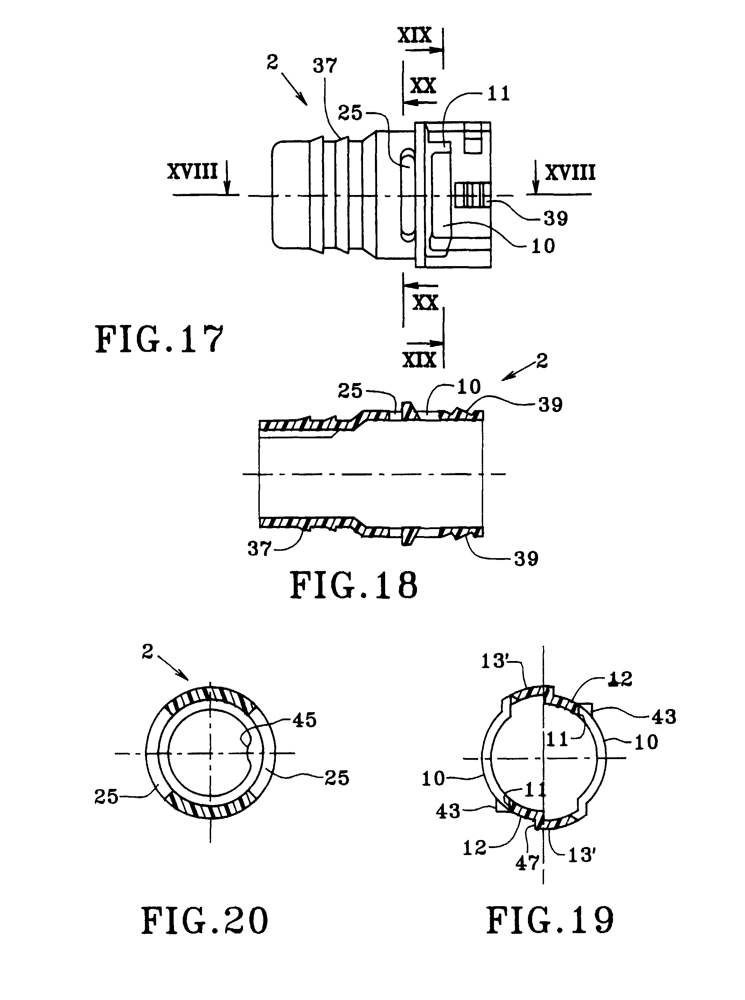

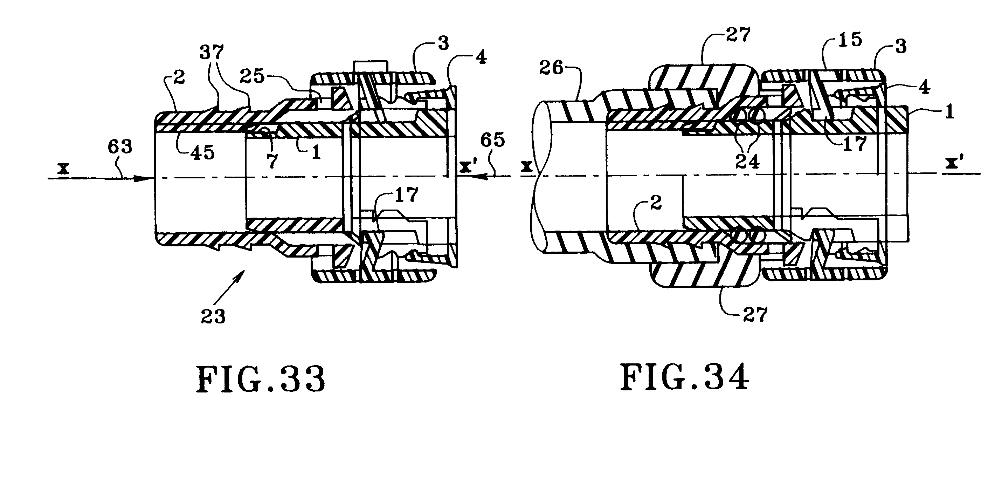

Sur les figures 17 à 20, l'on peut voir un des exemples préférés de réalisation du second élément tubulaire 2 selon la présente invention sensiblement identique au second élément tubulaire 2 des figures 4 à 6, mais comprenant en outre des éléments de rétention 39, notamment des encoches, des crochets 41 du témoin 4 des figures 30 à 32, des ergots 43 formant butée limitant la rotation de la bague de verrouillage 3 et une nervure 45 de positionnement angulaire par rapport à l'embout mâle 1. La nervure 45 a une forme complémentaire de l'évidement 7 pratiqué dans l'embout mâle 1.

Sans que cela présente un quelconque caractère limitatif, la zone 12 à partir de laquelle l'on obtient un réarmement automatique du verrouillage par la bague 3 se termine par un bord abrupt 47 ne permettant pas de poursuivre la rotation de la bague de verrouillage 3 vers la seconde zone 13' ayant un plus grand diamètre.

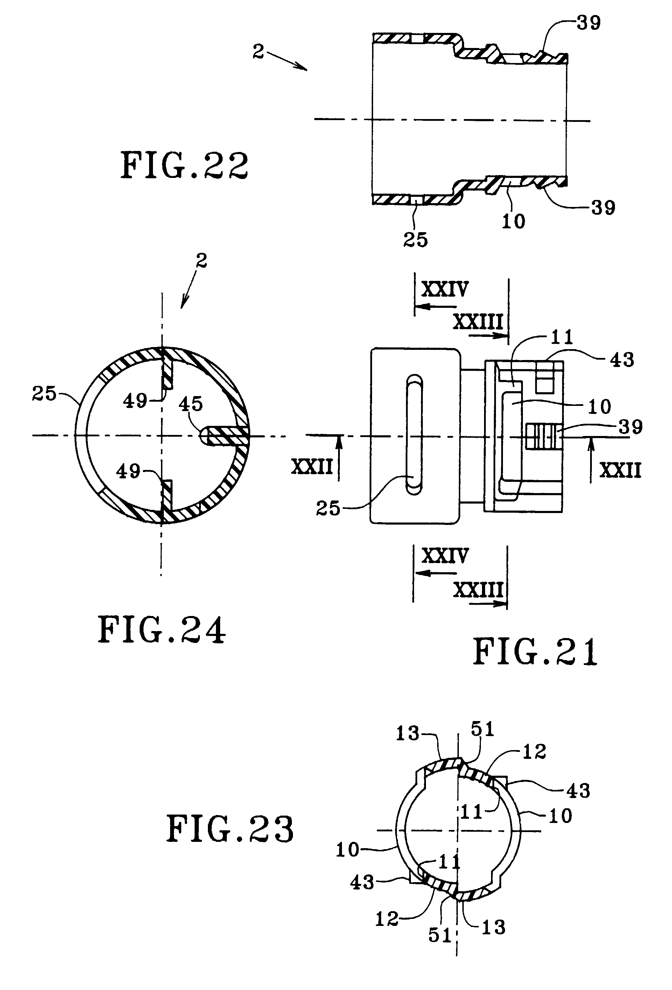

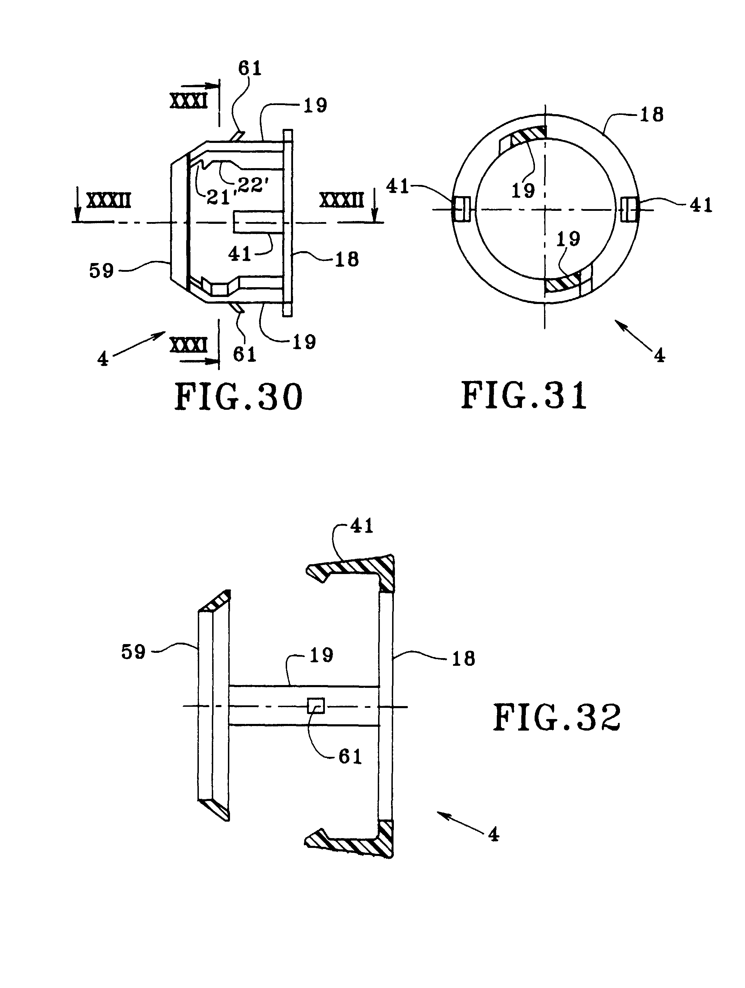

Sur les figures 21 à 24, l'on peut voir l'exemple préféré de réalisation d'un second élément tubulaire 2 du type à raccordement extérieur sur une conduite tubulaire flexible 26 par l'intermédiaire d'un bourrelet ou d'une couronne 29. Le second élément tubulaire des figures 21 à 24 comporte, outre les perfectionnements du second élément tubulaire des figures 17 à 20, deux nervures 49 de positionnement de l'embout mâle. En outre, dans l'exemple illustré sur la figure 23, une rampe 51 assure le passage entre les zones 12 et 13. Cette dernière permettant, en soutenant les ergots 15 de la bague de verrouillage 3 de maintenir de manière stable le dispositif selon la présente invention dans une condition non verrouillée. Il est bien entendu que, sans sortir du cadre de la présente invention, l'on peut équiper le second élément tubulaire des figures 21 à 24 d'un rebord abrupt 47 (figure 19) ou le second élément tubulaire 2 des figures 17 à 20 avec la rampe 51 sans sortir du cadre de la présente invention.

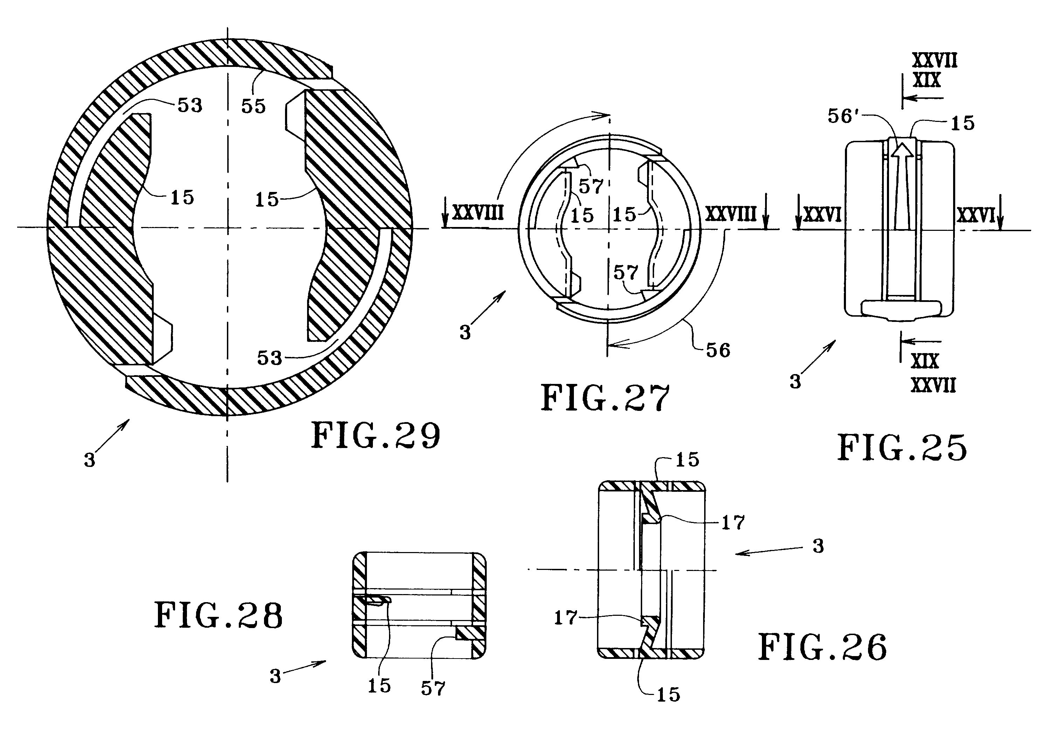

Sur les figures 25 à 29, l'on peut voir l'exemple préféré de réalisation d'une bague 3 de verrouillage dont les ergots 15 présentent une extension radiale séparée par une fente radiale 53 s'étendant sensiblement sur la moitié de l'extension des ergots 15 d'une languette 55. Avantageusement, la bague de verrouillage 3 peut tourner selon les flèches 56 pour assurer le déverrouillage, cette rotation étant limitée par des ergots 57 butant dans les ergots 43 du second élément tubulaire 2. Avantageusement, la bague de verrouillage 3 comporte une indication 56' du sens de rotation de déverrouillage.

Sur les figures 30 à 32, l'on peut voir l'exemple préféré de réalisation d'un témoin 4 selon la présente invention comprenant aux extrémités des languettes 19 opposées à celles solidarisées avec la bague 18 une bague 59, par exemple tronconique. En outre, les encoches 21 et 22 sont ménagées sur les faces internes des languettes 19 et non pas, comme dans le cas de la figure 1 sur les faces externes de ces languettes. Dans la variante de réalisation représentée, la bague 18 porte en outre des crochets 41 qui viennent se clipser dans les éléments de rétention 39 du second élément tubulaire 2. Les crochets 41 sont disposés sur le connecteur 23 entre le second élément tubulaire 2 et la bague de verrouillage 3. Les crochets 41 rendent le témoin 4 imperdable. En variante, les crochets 41 peuvent être remplacés par des ergots externes 61 montés sur les languettes 19, le second élément tubulaire correspondant comprenant non pas les éléments de rétention 39 ménagés sur sa face externe, mais des évidements ou lumières débouchant sur sa face interne.

Sur la figure 33, l'on peut voir le dispositif des figures 17 à 20 et 25 à 32 en cours d'assemblage (la conduite tubulaire 26, le manchon de surmoulage 27 et le joint 24 ne sont pas représentés sur cette figure). Le connecteur femelle 23 et/ou l'embout mâle 1 se rapprochent l'un de l'autre selon, respectivement, les flèches 63 et 65 selon l'axe x-x'. L'évidement 7 reçoit la nervure 45, ce qui assure le guidage angulaire de l'embout 1 par rapport au connecteur 23. Les éléments saillants 17 des ergots 15 de la bague de verrouillage 3 sont écartés par la rampe 6, puis assurent le verrouillage de l'embout mâle 1. Le témoin 4 est entraîné à l'intérieur du dispositif et disparaît masqué par la bague de verrouillage 3, comme illustré sur la figure 34 et/ou par le second élément tubulaire 2. Sur la figure 34, l'on peut voir le dispositif selon la présente invention dans la condition verrouillée.

Outre les éléments de la figure 33, l'on y a représenté la conduite tubulaire flexible 26, par exemple une durite en caoutchouc, le manchon de surmoulage 27 ainsi que le joint 24. Dans l'exemple de cette figure, le joint 24 est symbolisé par deux joints toriques, étant bien entendu qu'il est avantageux de mettre en oeuvre un joint, par exemple à lèvre obtenu par injection par l'ouverture 25.

Le dispositif selon la présente invention comporte un témoin 4 de verrouillage et/ou de raccordement amovible. Le témoin 4 n'est livré qu'à la demande du client. Ainsi, un dispositif de raccordement sans témoin de verrouillage et/ou de raccordement ne sort pas du cadre de la présente invention.

Les divers éléments du dispositif de raccordement selon la présente invention sont réalisés dans des matériaux compatibles avec les contraintes qu'ils doivent subir, notamment en ce qui concerne la pression, les températures maximales et minimales de fonctionnement ainsi que les cycles thermiques. Le second élément tubulaire 2 est, par exemple, réalisé en matière plastique, notamment en polyamide, notamment en polyamide 6-6 chargé, par exemple de fibres de verre. La bague de verrouillage 3 est réalisée en polyamide ou en PPS, le témoin 4, notamment, la bague 18, est réalisé en un plastique de couleur voyante, l'embout tubulaire mâle 1 est par exemple réalisé en métal ou en plastique.

Il est bien entendu que la présente invention n'est pas limitée au dispositif de raccordement 3, mais s'applique également au dispositif de raccordement coudé à angle droit ou autre (non représenté).

La présente invention s'applique au circuit de fluide, notamment au circuit pneumatique, au circuit de liquide, notamment d'eau ou d'huile pour les températures basses, moyennes ou hautes et pour des pressions faibles, moyennes ou élevées.

La présente invention s'applique principalement à l'industrie automobile et, notamment, au raccordement du circuit de refroidissement d'un moteur sur la boîte à eau d'un aérotherme ou au raccordement d'un circuit d'huile de moyenne pression d'un circuit d'assistance de direction d'un véhicule automobile.

**Revendications**

1. Dispositif de raccordement étanche d'un premier élément tubulaire (1) avec un second élément tubulaire (2) pour circuit de fluide comportant des moyens de verrouillage dans une condition raccordée du premier et du second éléments tubulaires et un témoin (4) de raccordement et/ou de verrouillage dont une partie apparente avant raccordement des premier (1) et second (2) éléments tubulaires est masquée dans la condition raccordée de ces éléments, ledit témoin (4) comportant une bague (18), caractérisé en ce que la bague (18) est apparente avant le raccordement, et en ce que le dispositif comporte une pièce (3) masquant la bague (18) du témoin (4) uniquement après raccordement des premier et second éléments tubulaires (1, 2).

2. Dispositif de raccordement selon la revendication 1, caractérisé en ce que le premier élément tubulaire (1) est un embout mâle comprenant une excroissance comportant une rampe (6) sur un versant dirigé vers l'extrémité de raccordement et un élément de retenu (5) et, notamment, un épaulement sur le versant opposé, en ce que le second élément tubulaire (2) a à son extrémité de raccordement un diamètre interne légèrement supérieur au diamètre externe de l'embout mâle (1) et comporte au moins une lumière (10), en ce qu'il comporte en outre une bague de verrouillage (3) entourant le second élément tubulaire (2) comprenant au moins un ergot élastique (15) traversant, au moins dans la condition raccordée, la lumière (10) du second élément tubulaire (2), en ce que, lors du raccordement, le ou les ergot(s) (15) est(sont) repoussé(s) par la rampe (6), puis est(sont) verrouillé(s) par l'élément de retenu (5), et en ce que le témoin (4) de raccordement et/ou de verrouillage comporte (nt) une bague (18) visible dans la condition non raccordée et un élément repoussé, lors du raccordement, par l'embout mâle (1), de manière à ce que la bague (18) du témoin (4) de verrouillage ou de raccordement se loge dans la bague de verrouillage (3) qui masque sa présence.

3. Dispositif selon la revendication 1 ou 2, caractérisé en ce que les ergots (15) ont en coupe axiale un profil en Z dont l'extrémité de la barre horizontale interne est dirigée à l'opposé de l'extrémité de raccordement du second élément tubulaire (2).

4. Dispositif selon la revendication 2 ou 3, caractérisé en ce que le ou les ergot(s) et la ou les lumière(s) (10) pratiqués dans le second élément tubulaire (2) ont une forme allongée et sont disposés radialement autour d'un axe (x-x') du dispositif de raccordement et, en ce que l'extrémité de chaque ergot (15) et/ou le bord de chaque lumière (10) comporte (nt) une rampe (11, 35) permettant de faire tourner la bague de verrouillage (3) assurant le désengagement des ergots (15) de l'élément de retenu (5) de l'embout mâle (1) pour assurer la déconnexion du dispositif de raccordement.

5. Dispositif de raccordement selon la revendication 4, caractérisé en ce que la bague de verrouillage (3) et le second élément tubulaire (2) ont une configuration relative à partir de laquelle les ergots (15) reviennent par élasticité dans la ou les lumière(s) (10) du second élément tubulaire (2) pour assurer le réarmement automatique du verrouillage.

**6.** Dispositif selon la revendication 5, caractérisé en ce que la bague de verrouillage (3) et le second élément tubulaire (2) ont une deuxième configuration relative stable dans laquelle les ergots (15) reposent sur la surface externe (13) du second élément tubulaire (2), la configuration relative à partir de laquelle les ergots (15) reviennent par élasticité dans la ou les lumière(s) (10) du second élément tubulaire (2) étant une configuration intermédiaire angulairement entre la condition dans laquelle le ou les ergot(s) (15) pénètre(nt) dans la ou les lumière(s) (10) du second élément tubulaire (2) et la deuxième configuration relative stable.

**7.** Dispositif de raccordement selon l'une quelconque des revendications précédentes, caractérisé en ce que le témoin (4) de raccordement ou de verrouillage est amovible.

**8.** Dispositif de raccordement selon l'une quelconque des revendications précédentes, caractérisé en ce que le témoin (4) de raccordement ou de verrouillage comporte des moyens de rappel dans la position apparente après une déconnexion.

**9.** Dispositif selon l'une quelconque des revendications précédentes, caractérisé en ce que le second élément tubulaire (2) comporte des moyens (10) de blocage en translation axiale de la bague de verrouillage (3) empêchant la translation axiale de la bague de verrouillage (3) par rapport au second élément tubulaire (2).

**10.** Dispositif selon l'une quelconque des revendications 1 à 8, caractérisé en ce que le second élément tubulaire (2) comporte des moyens de guidage en translation de la bague de verrouillage (3) entre une condition relative dans laquelle les ergots (15) reposent sur la surface externe du second élément tubulaire et une condition de verrouillage dans laquelle les ergots (15) sont engagés dans la ou les lumière(s) (10) ménagée(s) dans le second élément tubulaire (2).

**Claims**

**1.** A device for tightly connecting a first tubular element (1) to a second tubular element (2) for a fluid circuit, having means which lock when the first and second tubular elements are in a connected state and a connection and/or locking indicator (4), of which a part visible before the first (1) and second (2) tubular elements are connected is masked when these two elements are in the connected state, said indicator (4) having a ring (18), characterised in that the ring (18) is visible before connection and in that the device has a part (3) which does not mask the ring (18) of the indicator (4) until the first and second tubular elements (1, 2) have been connected.

**2.** A connecting device as claimed in claim 1, characterised in that the first tubular element (1) is a male fitting having a projection forming a ramp (6) with an incline directed towards the connection end and a retaining element (5) and, in particular, a shoulder on the opposite incline, in that the second tubular element (2) has an internal diameter at its connection end that is slightly larger than the external diameter of the male fitting (1) and has at least one orifice (10), in that it also has a locking ring (3) surrounding the second tubular element (2) having at least one elastic lug (15) crossing through the orifice (10) of the second tubular element (2), at least in the connected state, in that during connection, the lug or lugs 15 is (are) pushed aside by the ramp (6) and is(are) then locked by the retaining element (5), and in that the connection and/or locking indicator (4) has a ring (18) which is visible in the non-connected state and an element which is pushed aside by the male fitting (1) during connection so that the ring (18) of the locking and/or connecting indicator (4) fits inside the locking ring (3) which masks its presence.

**3.** A device as claimed in claim 1 or 2, characterised in that the lugs (15) have a Z-shaped profile in axial cross-section, the end of the internal horizontal bar thereof being directed opposite the connection end of the second tubular element (2).

**4.** A device as claimed in claim 2 or 3, characterised in that the lug or lugs and the orifice or orifices (10) provided in the second tubular element (2) are elongate in shape and are disposed radially about an axis (x-x') of the connecting device and in that the end of each lug (15) and/or the edge of each orifice (10) has (have) a ramp (11, 35) allowing the locking ring (3) to be rotated releasing the lugs (15) from the retaining element (5) of the male fitting (1) so that the connecting device can be disconnected.

**5.** A connecting device as claimed in claim 4, characterised in that the locking ring (3) and the second tubular element (2) have a relative configuration from which the lugs (15) move back into the orifice or orifices (10) of the second tubular element (2) due to elasticity so that the locking action can be automatically reset.

**6.** A device as claimed in claim 5, characterised in that the locking ring (3) and the second tubular element (2) have a second stable relative configuration in which the lugs (15) rest on the external surface (13) of the second tubular element (2), the relative configuration from which the lugs (15) move back into the orifice(s() 10 of the second tubular element (2) by elasticity being an intermediate configuration, in terms of angles, between the state in which the lug (s) 15 penetrate the orifice(s) 10 of the second tubular element (2) and the second stable relative configuration.

7. A connecting device as claimed in any one of the preceding claims, characterised in that the connection or locking indicator (4) is immobile.

8. A connecting device as claimed in any one of the preceding claims, characterised in that the connection or locking indicator (4) has return means in the visible position after disconnection.

9. A device as claimed in any one of the preceding claims, characterised in that the second tubular element (2) has means (10) for locking the locking ring (3) in axial translation, preventing any axial translation of the locking ring (3) relative to the second tubular element (2).

10. A device as claimed in any one of claims 1 to 8, characterised in that the second tubular element (2) has means for guiding the locking ring (3) in translation between a relative state in which the lugs (15) rest on the external surface of the second tubular element and a locked state in which the lugs (15) are located in the orifice(s) (10) provided in the second tubular element (2).

**Patentansprüche**

1. Vorrichtung zum dichten Anschluß eines ersten rohrförmigen Elements (1) an ein zweites rohrförmiges Element (2) für Fluidleitung, enthaltend Mittel für die Verriegelung in einem verbundenen Zustand des ersten und zweiten rohrförmigen Elements und ein Kontrollelement (4) für die Verbindung und/oder Verriegelung, von dem ein Teil, der vor der Verbindung des ersten (1) und zweiten (2) rohrförmigen Elements sichtbar ist, in dem verbundenen Zustand dieser Elemente verdeckt ist, wobei das Kontrollelement (4) einen Ring (18) hat, dadurch **gekennzeichnet,** daß der Ring (18) vor der Verbindung sichtbar ist, und daß die Vorrichtung ein Teil (3) hat, welches den Ring (18) des Kontrollelements (4) nur nach der Verbindung des ersten und zweiten rohrförmigen Elements (1, 2) verdeckt.

2. Vorrichtung zum Anschluß gemäß Anspruch 1, dadurch **gekennzeichnet,** daß das erste rohrförmige Element (1) ein hervorstehender Ansatz ist, welcher eine Wulst umfaßt, die eine Neigung (6) auf einer nach dem Ende der Verbindung gerichteten Schräge und ein Befestigungselement (5), und insbesondere eine Schulter auf der entgegengesetzten Schräge, hat, daß das zweite rohrförmige Element (2) an seinem Verbindungsende einen inneren Durchmesser, der ein wenig größer als der äußere Durchmesser des hervorstehenden Ansatzes (1) ist, und wenigstens eine Öffnung (10) hat, daß sie außerdem eine das zweite rohrförmige Element (2) umgebende Verriegelungshülse (3) hat, die wenigstens eine elastische Nase (15) umfaßt, welche, wenigstens im verbundenen Zustand, die Öffnung (10) des zweiten rohrförmigen Elements (2) durchsetzt, und daß während der Verbindung die Nase oder Nasen (15) durch die Neigung (6) zurückgeschoben wird (werden), danach durch das Befestigungs- element (5) verriegelt wird (werden), und daß das Kontroll- element (4) für die Verbindung und/oder Verriegelung einen Ring (18), der in dem nicht-verbundenen Zustand sichtbar ist, hat (haben) und ein während der Verriegelung durch den vorstehenden Ansatz (1) in der Art und Weise zurückgeschobenes Element, daß sich der Ring (18) des Kontrollelements (4) für die Verriegelung oder die Verbindung in der Verriegelungshülse (3) befindet, welche sein Vorhandensein verdeckt.

3. Vorrichtung nach Anspruch 1 oder 2, dadurch **gekennzeichnet,** daß die Nasen (15) im Axialschnitt ein Z-Profil haben, von dem das Ende des inneren horizontalen Schenkels entgegengesetzt zu dem Verbindungsende des zweiten rohrförmigen Elements (2) gerichtet ist.

4. Vorrichtung nach Anspruch 2 oder 3, dadurch **gekennzeichnet,** daß die Nase(n) und die Öffnung (en) (10), die in dem zweiten rohrförmigen Element (2) angebracht sind, eine langgestreckte Form haben und radial um eine Achse (x-x') der Vorrichtung zum Anschluß angeordnet sind, und daß das Ende jeder Nase (15) und/oder der Rand jeder Öffnung (10) eine Neigung bzw. Schrägfläche (11, 35) hat (haben), welche es gestattet, die Verriegelungshülse (3) zu drehen, was für das Außereingrifftreten der Nasen (15) von dem Befestigungselement (5) des hervorstehenden Ansatzes (1) sorgt, um die Trennung der Vorrichtung zum Anschluß sicherzustellen.

5. Vorrichtung zum Anschluß gemäß Anspruch 4, dadurch **gekennzeichnet,** daß die Verriegelungshülse (3) und das zweite rohrförmige Element (2) eine Relativkonfiguration haben, ausgehend von welcher die Nasen (15) durch die Elastizität in die Öffnung(en) (10) des zweiten rohrförmigen Elements (2) zurückkehren, um die automatische Reaktivierung der Verriegelung sicherzustellen.

6. Vorrichtung nach Anspruch 5, dadurch **gekennzeichnet,** daß die Verriegelungshülse (3) und das zweite rohrförmige Element (2) eine relativ stabile zweite Konfiguration haben, in welcher die Nasen (15) auf der äußeren Oberfläche (13) des zweiten rohrförmigen Elements (2) ruhen, wobei die Relativkonfiguration, ausgehend von welcher die Nasen (15) durch Elastizität in die Öffnung(en) (10) des zweiten rohrförmigen Elements (2) zurückkehren, eine winkelmäßig zwischen dem Zustand, in dem die Nase(n) (15) in die Öffnung(en) (10) des zweiten rohrförmigen Elements (2) eindringt (eindringen) und der relativ stabilen zweiten Konfiguration, liegende Konfiguration ist.

7. Vorrichtung zum Anschluß gemäß irgendeinem der vorhergehenden Ansprüche, dadurch **gekennzeichnet,** daß das Kontrollelement (4) für die Verbindung oder die Verriegelung abnehm- bzw. auswechselbar ist.

8. Vorrichtung zum Anschluß gemäß irgendeinem der vorhergehenden Ansprüche, dadurch **gekennzeichnet,** daß das Kontrollelement (4) für die Verbindung oder die Verriegelung Mittel zum Rückstellen in die sichtbare Position nach einer Trennung hat.

9. Vorrichtung gemäß irgendeinem der vorhergehenden Ansprüche, dadurch **gekennzeichnet,** daß das zweite rohrförmige Element (2) Mittel (10) für die Blockierung der Axialparallelverschiebung bzw. -translation der verriegelungshülse (3) hat, welche die Axialparallelverschiebung bzw. -translation der Verriegelungshülse (3) mit Bezug auf das zweite rohrförmige Element (2) verhindern.

10. Vorrichtung gemäß irgendeinem der Ansprüche 1 bis 8, dadurch **gekennzeichnet,** daß das zweite rohrförmige Element (2) Mittel für die Parallelverschiebungs-bzw. -translationsführung der Verriegelungshülse (3) zwischen einem Relativzustand, in welchem die Nasen (15) auf der äußeren Oberfläche des zweiten rohrförmigen Elements ruhen, und einem verriegelungszustand, in welchem die Nasen (15) in Eingriff in der oder den in dem zweiten rohrförmigen Element (2) angebrachten Öffnung(en) (10) sind, enthält.

FIG.1

FIG.2

EP 0 670 449 B1

FIG.3

FIG.4

FIG.5

FIG.6

EP 0 670 449 B1

FIG.7a

FIG.7b

FIG.7c

FIG.8

FIG.9

FIG.10

15

FIG.16

FIG.15

FIG.11

FIG.14

FIG.13

FIG.12

EP 0 670 449 B1

FIG.17

FIG.18

FIG.20

FIG.19

17

FIG.22

2

39

39

25

10

FIG.24

2

25

49

45

49

XXIV

XXIII

11

43

10

39

XXII

XXII

25

XXIV

XXIII

FIG.21

FIG.23

13

51

12

43

11

10

10

43

11

12

51

13

FIG.30

FIG.31

FIG.32

EP 0 670 449 B1

**FIG.29**

**FIG.27**

**FIG.25**

**FIG.28**

**FIG.26**

FIG.33

FIG.34

EP 0 670 449 B1